# EUROPÄISCHE PATENTSCHRIFT

(11) **EP 1 432 611 B1**
(45) Veröffentlichungstag und Bekanntmachung des Hinweises auf die Patenterteilung: **18.07.2007**
(21) Anmeldenummer: 02779142.5
(22) Anmeldetag: 07.10.2002
(51) Int. Cl.: B64F 1/18, H05B 37/00

(54) **STEUERVORRICHTUNG FÜR BLITZFEUERANLAGEN AUF FLUGHÄFEN**
CONTROL DEVICE FOR FLASHLIGHT SYSTEMS IN AIRPORTS
DISPOSITIF DE COMMANDE POUR SYSTEMES DE FEUX A ECLATS DANS DES AEROPORTS

(30) Priorität: 05.10.2001 DE 10149261
(43) Veröffentlichungstag der Anmeldung: 30.06.2004
(73) Patentinhaber: SIEMENS AKTIENGESELLSCHAFT, 80333 München (DE)
(72) Erfinder: CATOUL, Pierre, B-2820 Bonheiden (BE); CAUS, Francis, B-1030 Schaarbeek (BE); TESSENS, Daniel, B-3020 Herent (BE); VANDEVOORDE, Jean-Claude, B-1820 Steenkokkerzeel (BE)
(86) Internationale Anmeldenummer: PCT/DE2002/003785
(87) Internationale Veröffentlichungsnummer: WO 2003/031262

(56) Entgegenhaltungen:
- WO-A-99/14989
- DE-A- 10 007 895
- DE-A- 10 007 896
- DE-A- 10 026 923
- PATENT ABSTRACTS OF JAPAN vol. 014, no. 557 (E-1011), 11. Dezember 1990 (1990-12-11) -& JP 02 239595 A (HITACHI LTD), 21. September 1990 (1990-09-21)

## Beschreibung

Die Erfindung bezieht sich auf eine Steuervorrichtung für Blitzfeueranlagen auf Flughäfen, mit Blitzeinheiten, die eingangsseitig an eine Energieversorgungsleitung und ausgangsseitig über ein Lampenkabel an jeweils eine Blitzlampe der Blitzfeueranlage angeschlossen sind und die jeweils ein PCB (Printed Circuit Board) zur Ansteuerung der Blitzlampe aufweisen, einer lokalen Mastersteuerung, und einer Anschlusseinrichtung, mittels der die lokale Mastersteuerung mit den Blitzeinheiten verbunden ist.

Der Stand der Technik wird unter anderen durch die JP-A-02 239595 und die DE-A-100 07 896 gebildet.

Die Blitzeinheiten bekannter derartiger Steuervorrichtungen für Blitzfeueranlagen auf Flughäfen sind üblicherweise mit Hochspannungskondensatoren ausgerüstet, die für den Betrieb der Blitzlampen Ausgangsspannungen in Höhe von ca. 2000 V zur Verfügung stellen. Aufgrund dieser für den Betrieb der Blitzfeueranlagen erforderlichen Hochspannungen kommt es zu erheblichen Belastungen von im Freien angeordneten Kabeln und Anlagenteilen, was insbesondere bei feuchtem Wetter vergleichsweise oft zu Anlagenausfällen führt. Die für den Betrieb erforderlichen Hochspannungen gehen darüber hinaus mit erheblichen Sicherheitsrisiken einher. Sofern die Blitzlampe mittels einer Kabelverbindung mit der Blitzeinheit verbunden ist, die länger als 6 m ist, ergeben sich Instabilitäten hinsichtlich der Lichtabgabeleistung. Darüber hinaus bieten bekannte derartige Steuervorrichtungen wenig oder keine Möglichkeiten zur Überwachung des Betriebs einzelner Blitzlampen.

Des Weiteren ist es aus dem Stand der Technik bekannt, in Niederspannungsbauart ausgebildete Blitzlampen direkt an Hauptenergieklemmen anzuschließen, gegebenenfalls mit einer zwischengeschalteten kleinen Strombegrenzungsimpedanz. Hierdurch entstehen große Stromimpulse durch die Energiequelle und sind große Kabelquerschnitte erforderlich; die Stromimpulse bewirken beträchtliche Störungen der Hauptenergiequelle, wodurch andere an dieselbe Hauptenergiequelle angeschlossene Verbraucher nachteilig beeinflusst werden.

Der Erfindung liegt die Aufgabe zugrunde, eine Steuervorrichtung für Blitzfeueranlagen auf Flughäfen der eingangs geschilderten Art zu schaffen, bei der die Sicherheitsrisiken beim Betrieb der Blitzfeueranlage erheblich reduziert sind und die darüber hinaus mit einem geringeren Produktions- und Installationsaufwand realisierbar ist.

Diese Aufgabe wird erfindungsgemäß durch die im Patentanspruch angesehenen Merkmale gelöst.

Durch die verlängerte Entladungszeit und die Reduzierung des ausgangsseitig der Blitzeinheiten zur Verfügung gestellten Arbeitsspannungsniveaus in Verbindung mit dem erfindungsgemäß möglichen Einsatz von Niedrigvoltleitungen zwischen den Blitzeinheiten und den Blitzlampen ist es möglich, elektromagnetische Verzerrungen zu vermeiden, die durch die Leistungsstromkreise der Blitzeinheiten und die Stromversorgungs- bzw. Lampenkabel erzeugt werden. Stromspitzen können durch den Einsatz der Niederspannungskondensatoren als Energieintegratoren vermieden oder zumindest erheblich reduziert werden.

Der Querschnitt für das Stromversorgungs- bzw. Lampenkabel kann im Vergleich zum Stand der Technik erheblich kleiner sein; bei nicht reduziertem Querschnitt des Stromversorgungs- bzw. Lampenkabels sind größere Entfernungen zwischen der Blitzeinheit und der als Niederspannungsleuchte ausgebildeten Blitzlampe bei geringen Verlusten realisierbar. Die geringen Verluste in den Lampenkabeln gehen darauf zurück, dass die Stromspitzen nur etwa halb so hoch wie bei typischen Hochspannungsblitzlampen sind. Die Niederspannungsleuchten sind in Übereinstimmung mit den für Blitzlampen auf Flughäfen gültigen Standards IEC-61824 sowie 61000 (elektromagnetische Kompatibilität) ausgeführt. Die Energieeinspeisung ist im Falle der erfindungsgemäßen Steuervorrichtung über einen großen Bereich möglich, wobei die Blitzeinheit schon bei einer Versorgung mit ca. 65 % des Nennniveaus korrekt arbeitet. Das eigentliche Schaltglied kann nahe der Niederspannungsleuchte bzw. der Blitzlampe angeordnet werden, wodurch Energieeinsparungen und größere Kabellängen möglich sind und geringere Verzerrungen erreicht werden. Als Lampenkabel kann ein für Erdverlegung geeignetes 5-adriges Kabel eingesetzt werden, mit zwei Achsen für die Lampenleistung, zwei Adern zum Anschluss des Sicherheitsschalters und einem Endkabel. Zwischen zwei Blitzen wird der Niederspannungskondensator mit einem sehr niedrigen Strom, der die Blitzlampe nicht auslösen kann, auf das Nennschaltspannungsniveau aufgeladen. Beim Auslösen wird plötzlich die gesamte Energie zur Blitzlampe weitergeleitet. Daher sind lediglich zwei Adern für die Lampenleistung erforderlich.

Vorteilhaft weisen die Blitzeinheiten Niederspannungskondensatoren auf, die in Anpassung an das Arbeitsspannungsniveau von 350 V bis 600 V ausgebildet sind. Hierdurch ergeben sich erhebliche Einsparungen bezüglich der Abmessungen sowie bezüglich der Kosten für die Kondensatoren; der erfindungsgemäß mögliche Verzicht auf Hochspannungskondensatoren führt zu einer erheblichen Reduzierung der Abmessungen der Blitzgehäuse.

Gemäß einer weiteren vorteilhaften Ausführungsform der erfindungsgemäßen Steuervorrichtung weisen die Blitzeinheiten an das Arbeitsspannungsniveau von 350 V bis 600 V angepasste SMPS-Switched Mode Power Supply)-Transformatoren auf, die zweckmäßigerweise in Übereinstimmung mit dem Industrie-Standard EN61000-3-2 (PFC : Power Factor Corrected) ausgeführt sind, ohne dass sie zusätzliche Energieverluste herbeiführen.

Da die Anschlusseinrichtung zwischen den Blitzeinheiten und der lokalen Mastersteuerung als lokales Feldbussystem ausgebildet ist, über das vorzugsweise bis zu 32 Blitzeinheiten an die lokale Mastersteuerung anschließbar sind, kann in den Blitzeinheiten eine simultane Blitzsoftwareanpassung über das lokale Feldbussystem realisiert werden.

Eine Konfiguration und Parametrierung mittels eines PC über das lokale Bussystem ist möglich, wenn die lokale Mastersteuerung unmittelbar mit einer mobilen Mastersteuerung mit PC in Steckverbindung bringbar ist.

Auch für die lokale Mastersteuerung und die mobile Mastersteuerung ist eine Blitzsoftwareanpassung am Einsatzort möglich.

Aufgrund des bei der erfindungsgemäßen Steuervorrichtung vorgesehenen Verzichts auf Hochspannungskondensatoren ist es möglich, die PCB der Blitzeinheiten der erfindungsgemäßen Steuervorrichtung mit einem Mikrocontroller zu versehen, mittels dem jeder als Niederspannungsleuchte ausgebildeten Blitzlampe eine individuelle Adresse zugeordnet werden kann. Ein derartiger Mikrocontroller konnte bei Steuervorrichtungen gemäß dem Stand der Technik, die mit Hochspannüngskondensatoren ausgerüstet waren, nicht verwendet werden, da seine Funktion durch die Stromspitzen beeinträchtigt werden konnte. Mittels der Mikrocontroller in Verbindung dem lokalen Feldbussystem können wesentlich verfeinerte Überwachungsmaßnahmen der Blitzlampen bzw. der Niederspannungsleuchten getroffen werden. Im Gegensatz zu herkömmlichen Steuervorrichtungen, bei denen man allenfalls feststellen konnte, ob eine Blitzlampe kaputt war, ohne dass man wissen konnte, welche der Blitzlampen der Blitzfeueranlage kaputt war, kann mittels des Mikrocontrollers in der Blitzeinheit die Adresse einer defekten Blitzlampe über das lokale Feldbussystem zurückgemeldet werden, so dass der Ort der defekten Blitzlampe zentrale erfasst werden kann. Selbstverständlich kann jede Blitzlampe direkt adressiert und angesteuert werden.

Da zwischen einigen PCB und wenigen Zusatzkomponenten lediglich eine geringe Anzahl von Zwischenverbindungen erforderlich ist, ergibt sich sowohl bei der Verkabelung als auch bei der Einrichtung eine erhebliche Reduzierung des Aufwands. Durch den Mikrocontroller ist eine aktive Stromregelung für jede Blitzlampe bzw. Niederspannungsleuchte möglich; hierdurch kann die Lebensdauer der Niederspannungsleuchten bzw. Blitzlampen erheblich erhöht werden, was zu einem erheblich geringeren Aufwand für die Instandhaltung der Blitzfeueranlage führt. Darüber hinaus kann mittels des Mikrocontrollers die Betriebszeit der jeweiligen Niederspannungsleuchte bzw. Blitzlampe registriert werden, wobei ein Austausch von Niederspannungsleuchten bzw. Blitzlampen in regelmäßigen Zeitabständen vorgenommen werden kann, um Ausfälle möglichst zu vermeiden. Der Mikrocontroller jedes PCB ist zweckmäßigerweise so ausgebildet, dass die Lichtstärke jeder als Niederspannungsleuchte ausgebildeten Blitzlampe separat ansteuerbar ist, wobei vorteilhaft die Ansteuerung in Abhängigkeit von die Wetter- und/oder Lichtverhältnisse bestimmenden Parametern elektronisch regelbar sein sollte, wodurch die Einflüsse von Schwankungen des Ausgangsspannungsniveaus, des Kondensatorwerks, des Leitungswiderstands, Umgebungstemperaturen etc. minimiert werden. Über das lokale Feldbussystem kann dann die Lichtstärke der einzelnen Blitzlampen bzw. Niederspannungsleuchten separat angesteuert werden. Die Lichtstärke kann elektronisch kontrolliert werden, so dass auf unterschiedliche Wetterverhältnisse oder andere Anforderungen eingegangen werden kann. Bei Nebel kann beispielsweise eine höhere Lichtstärke als bei optimalen Sichtverhältnissen eingestellt werden. Des Weiteren kann die Lichtstärke kontinuierlich variiert werden, und zwar für jede Blitzlampe bzw. Niederspannungsleuchte einzeln oder auch für alle Blitzlampen bzw. Niederspannungsleuchten, so dass zum Beispiel auch bei 50 hintereinander geschalteten Blitzlampen bzw. Niederspannungsleuchten unterschiedliche Lichtstärken an der ersten, zweiten, dritten usw. angelegt werden können. Mit dem vorstehend beschriebenen lokalen Feldbussystem in Verbindung mit den Mikrocontrollern sind daher alle möglichen Einstellungen oder Regulierungen der Lichtstärke möglich. So kann zum Beispiel auch die Lichtstärke in Abhängigkeit von einem sich annähernden oder sich entfernenden Flugzeug eingestellt werden; wenn das Flugzeug schon einige Blitzlampen bzw. Niederspannungsleuchten hinter sich gelassen hat, können diese ausgeschaltet werden, wohingegen die Lichtstärke der sich noch im Sichtbereich des Flugzeugs befindlichen Blitzlampen bzw. Niederspannungsleuchten intensiviert werden kann.

Wenn der Mikrocontroller jedes PCB so ausgebildet ist, dass die Lichtstärke jeder als Niederspannungsleuchte ausgebildeten Blitzlampe in Abhängigkeit von der Kabellänge des Lampenkabels zwischen Blitzeinheit und als Niederspannungsleuchte ausgebildeten Blitzlampe regelbar ist, kann erreicht werden, dass alle Blitzlampen bzw. Niederspannungsleuchten, auch wenn sie über unterschiedliche Kabellängen an ihre Blitzeinheiten angeschlossen sind, dennoch die gleiche bzw. die gewünschte Lichtintensität beibehalten.

Die Lichtintensität bzw. Helligkeit der Blitzlampen bzw. Niederspannungsleuchten ist stufenlos einstellbar, wobei allenfalls geringe Abweichungen von der eingestellten Helligkeitsstufe bei den einzelnen Niederspannungsleuchten auftreten können. Der Stromverbrauch ist an das Helligkeitsniveau und an Zeitvorgaben angepasst und so konstant wie möglich, wobei der Leistungskorrekturfaktor nahe bei 1 liegt. Einschaltstromstöße können so verhindert werden. In sicherheitstechnisch vorteilhafter Weise kommt es zu schnellen Spannungsentladungen.

Zur Reduzierung des Aufwands für die Verkabelung bei Herstellung und Installation ist es vorteilhaft, wenn jede Blitzeinheit Eingangs- und Ausgangsanschlüsse aufweist, über die sie an die Energieversorgungsleitung anschließbar ist.

Alternativ ist es möglich, die Blitzeinheiten über Anschlussdosen an die Energieversorgungsleitung anzuschließen.

Die lokale Mastersteuerung kann über einen ersten Verbindungsbus, über den ersten und einen zweiten Verbindungsbus, über einen Multileitungsverbindungsbus oder über den ersten Verbindungsbus und den Multileitungsverbindungsbus an räumlich entfernte Anwenderzentralen, Leitstände oder dergleichen angeschlossen werden. In der Anwenderzentrale bzw. in dem Leitstand können die einer Mastersteuerung zugeordneten Blitzeinheiten und Blitzlampen bzw. Niederspannungsleuchten als ein einziges System präsentiert werden. Es kann eine Vielzahl simultaner Fernüberwachungen realisiert werden. Die Blitzabfolge und die Frequenz der Blitzfeueranlage sind sowohl bei der Parametrierung als auch im Betrieb fernkonfigurierbar. Es sind keine Maßnahmen an einzelnen Blitzlampen bzw. Niederspannungsleuchten erforderlich.

Es ist eine Fernüberwachung bezüglich des detaillierten Systemstatus und des Status jeder Blitzlampe bzw. Niederspannungsleuchte möglich. Die Lichtstärke jeder Niederspannungsleuchte bzw. Blitzlampe ist individuell ferneinstellbar. Für die Blitzlampen bzw. Niederspannungsleuchten kann ein individuelles Lichtstärkeniveau vorgegeben werden, bei dessen Unterschreiten ein entsprechendes Meldesignal erfolgt. Es ist eine Analyse der Echtzeitsequenz und der Blitzfrequenz des Betriebssystems möglich, und zwar während der Parametrierung und im Betrieb. Es können Blitzsequenzen vorprogrammiert werden, wie zum Beispiel MALSR, ALSF, SSALR, ODALS usw.

Jeder Blitzeinheit kann ein separates Gehäuse zugeordnet sein.

Bei einer vorteilhaften Weiterbildung sind mehrere Blitzeinheiten, vorzugsweise drei Blitzeinheiten, in einem ihnen gemeinsamen Gehäuse angeordnet, woraus sich vorteilhaft Einsparungen bei der Verkabelung während der Installation ergeben. Darüber hinaus kann bei der Anordnung von drei Blitzeinheiten in einem Gehäuse das Lastgleichgewicht eines Dreiphasensystems symmetrisch sein.

Die die Blitzeinheiten aufnehmenden Gehäuse sind vorteilhaft aus Kunststoff oder dergleichen hergestellt.

Sofern mehrere Blitzeinheiten in einem ihnen gemeinsamen Gehäuse untergebracht sind, können vorteilhaft die Schaltelektroniken der in diesem Gehäuse angeordneten mehreren Blitzeinheiten redundant mit elektrischer Energie versorgt werden. Zum Schutz vor Überspannungen ist es vorteilhaft, wenn jede Blitzeinheit ein Überspannungsschutzglied aufweist. Falls die Überspannung niedrig ist, kann das Überspannungsschutzglied die Überschussenergie absorbieren. Falls die Überspannung hoch ist, ist ein Versagen des Überspannungsschutzglieds möglich, womit die Blitzeinheit ungeschützt gegen spätere Überspannungen wäre. In diesem Fall wird ein Kippschalter am Überspannungsglied ausgelöst, was mittels des PCB der Blitzeinheit erfasst und dann der lokalen Mastersteuerung bzw. der Anwenderzentrale, dem Leitstand etc. mitgeteilt wird.

Um einen zuverlässigen Schutz vor bzw. eine zuverlässige Überwachung der Feuchtigkeits- und der Temperaturverhältnisse zu gewährleisten ist es zweckmäßig, wenn jeder Blitzeinheit eine Heizvorrichtung und Temperatursensoren zugeordnet sind.

Gemäß einer vorteilhaften Weiterbildung der Erfindung weist der PCB jeder Blitzeinheit einen zusätzlichen Anschluss auf, mittels dem eine unmittelbare Verbindung mit einer mobilen Mastersteuerung mit einem PC oder einer ähnlichen Steuereinheit installierbar ist. Hierdurch können auch sehr weit, zum Beispiel mehr als 1 km, von der lokalen Mastersteuerung entfernte Blitzeinheiten einer Blitzsoftwareanpassung unterzogen werden, die zum Beispiel auch jenseits bestimmter Sicherheitsgrenzen angeordnet sind.

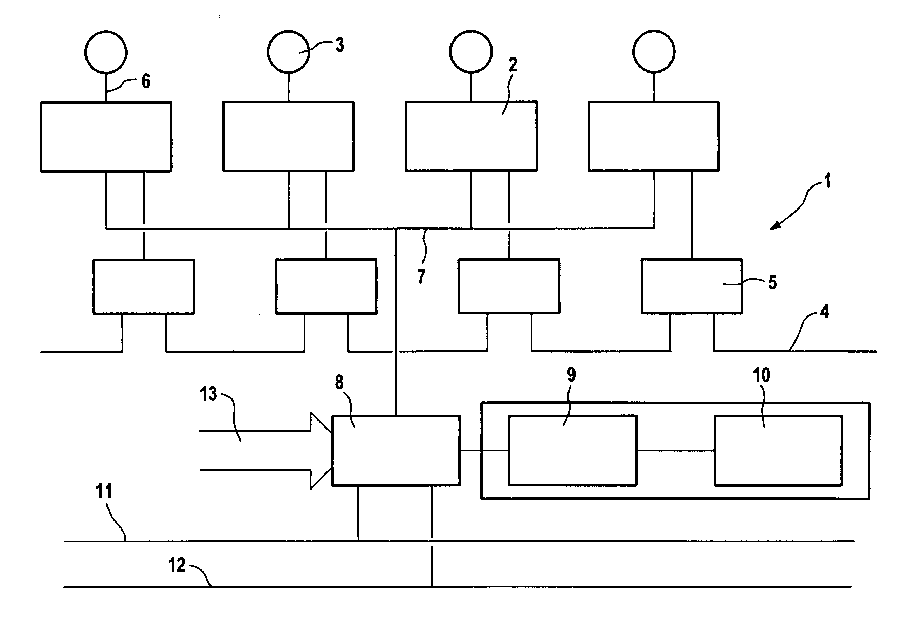

Zweckmäßigerweise ist die lokale Mastersteuerung mit einem Positionsschalter mit fünf Stellungen versehen, nämlich der Stellung "Remote", der Stellung "Off", der Stellung "Step 1", der Stellung "Step 2" und der Stellung "Step 3". Hierdurch kann der Anwender die Blitzeinheiten der Steuervorrichtung lokal steuern; im Normalbetrieb befindet sich der Positionsschalter der lokalen Mastersteuerung in der Stellung "Remote", um Zugang zu der Steuervorrichtung über die Verbindungsbusse oder den Multileitungsverbindungsbus zu gewähren. Im Folgenden wird die Erfindung anhand einer Ausführungsform unter Bezugnahme auf die Zeichnung näher erläutert, in der eine erfindungsgemäße Steuervorrichtung für Blitzfeueranlagen auf Flughäfen prinzipiell dargestellt ist.

Eine Steuervorrichtung 1 für Blitzfeueranlagen auf Flughäfen, wie sie in der Figur gezeigt ist, hat eine Vielzahl von Blitzeinheiten 2, von denen jeweils eine einer als Niederspannungsleuchte ausgebildeten Blitzlampe 3 zugeordnet ist.

Jede Blitzeinheit 2 ist eingangsseitig an eine Netz- bzw. Energieversorgungsleitung 4 angeschlossen. Im dargestellten

Ausführungsbeispiel erfolgt der Anschluss der Blitzeinheit 2 an die Energieversorgungsleitung 4 mittels einer Anschlussdose 5. Alternativ ist es möglich, jede Blitzeinheit 2 mit Eingangs- und Ausgangsanschlüssen zu versehen, über die die Blitzeinheit 2 dann unmittelbar an die Energieversorgungsleitung 4 angeschlossen werden kann. Eine Anschlussdose 5 entfällt im letzteren Fall, mit der Folge, dass der Aufwand für die Verkabelung bei Herstellung und Installation der Steuervorrichtung 1 reduziert wird.

Ausgangsseitig ist die Blitzeinheit 2 über ein als Niedrigvoltleitung ausgebildetes Lampenkabel 6 an die Niederspannungsleuchte bzw. die Blitzlampe 3 angeschlossen.

Die Niederspannungsleuchten bzw. Blitzlampen 3 arbeiten mit einem Spannungsniveau zwischen 350 V und 600 V. Entsprechend sind in den Blitzeinheiten 2 Niederspannungskondensatoren vorgesehen, die für die Blitzlampen 3 ein Arbeitsspannungsniveau zwischen 350 V und 600 V zur Verfügung stellen. Die Lampenkabel 6 sind - wie vorstehend bereits erwähnt - als Niedrigvoltleitungen für dieses Spannungsniveau zwischen 350 V und 600 V ausgebildet. Zu den Blitzeinheiten 2 gehören darüber hinaus an das Spannungsniveau von 350 V bis 600 V angepasste SMPS (Switched Mode Power Supply)-Transformatoren, die in Übereinstimmung mit dem Industriestandard EN61000-3-2 (PFC: Power Factor Corrected) ausgeführt sind.

Des Weiteren ist in einem PCB (Printed Circuit Board) der Blitzeinheiten 2 ein Mikrocontroller vorgesehen; derartige Mikrocontroller können im Falle der erfindungsgemäßen Steuervorrichtung 1 mit dem PCB der Blitzeinheiten 2 kombiniert werden, da für die Ausgestaltung der Blitzeinheiten 2 nicht mehr - wie beim Stand der Technik - Hochspannungskondensatoren eingesetzt werden, mit der Folge, dass den Betrieb von Mikrocontrollern beeinträchtigende Stromspitzen im Falle der Blitzeinheit 2 der erfindungsgemäßen Steuervorrichtung 1 nicht mehr auftreten. Mittels des mit dem Mikrocontroller versehenen PCB der Blitzeinheit 2 sind die Niederspannungsleuchten bzw. Blitzlampen 3 der Blitzfeueranlage geregelt mit elektrischem Strom versorgbar.

Durch den in jeder Blitzeinheit 2 vorhandenen Mikrocontroller kann jeder Niederspannungsleuchte bzw. Blitzlampe 3 eine individuelle Adresse zugeordnet werden. Des weiteren ist jede Niederspannungsleuchte bzw. Blitzlampe 3 separat ansteuerbar, wobei der Betrieb der Niederspannungsleuchte bzw. Blitzlampe 3 in Abhängigkeit von die Wetter- und/oder Lichtverhältnisse bestimmenden Parametern mittels des mit dem Mikrocontroller ausgerüsteten PCB der Blitzeinheit 2 elektronisch regelbar ist. Durch den Mikrocontroller bzw. den PCB kann bei der Steuerung der Niederspannungsleuchte bzw. der Blitzlampe auch die Kabellänge zwischen der Blitzeinheit 2 und der Blitzlampe 3 berücksichtigt werden.

Die Blitzeinheiten 2 der in der Figur gezeigten erfindungsgemäßen Steuervorrichtung 1 sind über ein lokales Feldbussystem 7 an eine lokale Mastersteuerung 8 angeschlossen, wobei im dargestellten Ausführungsbeispiel der erfindungsgemäßen Steuervorrichtung eine lokale Mastersteuerung 8 an bis zu 32 Blitzeinheiten 2 angeschlossen werden kann.

An die lokale Mastersteuerung 8 und an jede Blitzeinheit 2 ist mittels einer Steckverbindung eine mobile Mastersteuerung 9, der ein PC 10 zugeordnet ist, anschließbar. Hierdurch ist eine Konfiguration und eine Parametrierung der Steuervorrichtung 1 mittels des PC 10 über das lokale Feldbussystem 7 oder unmittelbar an jeder Blitzeinheit 2 realisierbar.

Die lokale Mastersteuerung 8 kann über einen ersten Verbindungsbus 11, über den ersten Verbindungsbus 11 und einen zweiten Verbindungsbus 12, über den ersten Verbindungsbus 11 und einen Multileitungsverbindungsbus 13 oder nur durch den Multileitungsverbindungsbus 13 an in der FIGUR nicht gezeigte Anwenderzentralen, Leitstände etc. angeschlossen werden.

Im dargestellten Ausführungsbeispiel ist jede Blitzeinheit 2 separat für sich in einem Gehäuse, welches als Kunststoffgehäuse ausgebildet sein kann, vorgesehen. Es ist möglich, zum Beispiel drei Blitzeinheiten 2 in einem ihnen gemeinsamen Gehäuse vorzusehen, wobei dann die Schaltelektroniken der drei in einem Gehäuse vorgesehenen Blitzeinheiten 2 redundant mit elektrischer Energie versorgt werden.

Jede Blitzeinheit 2 ist mit einem Überspannungsschutzglied und mit einer Heizvorrichtung und Temperatursensoren ausgerüstet. Eine niedrige Überspannung kann durch das Überspannungsschutzglied absorbiert werden. Falls die Überspannung jedoch hoch ist, ist ein Versagen des Überspannungsschutzglieds möglich, womit die Blitzeinheit 2 ungeschützt gegen spätere Überspannungen wäre. In diesem Fall wird ein Kippschalter am Überspannungsschutzglied ausgelöst, was mittels des PCB der Blitzeinheit 2 erfasst und dann der lokalen Mastersteuerung 8 bzw. der Anwenderzentrale, dem Leitstand etc. mitgeteilt wird.

## Patentansprüche

1. Steuervorrichtung für Blitzfeueranlagen auf Flughäfen, mit Blitzeinheiten (2), die eingangsseitig an einer Energieversorgungsleitung (4) und ausgangsseitig über ein Lampenkabel (6) an jeweils einer Blitzlampe (3) der Blitzfeueranlage angeschlossen sind und die jeweils ein PCB (Printed Circuit Board) zur Ansteuerung der Blitzlampe (3) aufweisen, einer lokalen Mastersteuerung (8), und einer Anschlusseinrichtung (7), mittels der die lokale Mastersteuerung (8) mit den Blitzeinheiten (2) verbunden ist, wobei
jede Blitzeinheit (2) einen Energie integrierenden Niederspannungskondensator aufweist, der durch eine an die als Niederspannungsleuchten ausgebildeten Blitzlampen (3) angeschlossene leistungsfaktorkorrigierte Stromquelle versorgbar ist, wobei die zu den Blitzlampen (3) übertragene Energie elektronisch steuerbar ist, um die Lichtstärke zu regeln und gegen Spannungsquelle - und Leitungsimpedanzschwankungen zu stabilisieren, wobei die die Blitzeinheiten (2) an die lokale Mastersteuerung (8) anbindende Anschlusseinrichtung (7) als lokales Feldbussystem (7) ausgebildet ist, so dass mittels derselben elektrischen Installation unterschiedliche klassisch geordnete, simultane oder gemischte Blitzkonfigurationsmuster realisierbar sind, wobei
die PCB der Blitzeinheiten (2) mit einem Mikrocontroller versehen sind, mittels dem jeder als Niederspannungsleuchte ausgebildeten Blitzlampe (3) eine individuelle Adresse zugeordnet ist, und wobei
der Mikrocontroller jedes PCB so ausgebildet ist, dass die Lichtstärke jeder als Niederspannungsleuchte ausgebildeten Blitzlampe (3) separat ansteuerbar ist, **dadurch gekennzeichnet, dass**
die Lichtstärke jeder als Niederspannungsleuchte ausgebildeten Blitzlampe (3) in Abhängigkeit von die Wetter und/oder Lichtverhältnisse bestimmenden Parametern elektronisch regelbar und
in Abhängigkeit von der Kabellänge des Lampenkabels (6) zwischen Blitzeinheit (2) und als Niederspannungsleuchte ausgebildeter Blitzlampe (3) regelbar ist.

2. Steuervorrichtung nach Anspruch 1, bei der die Niederspannungskondensatoren der Blitzeinheiten (2) in Anpassung an ein Arbeitsspannungsniveau von 350 V bis 600 V ausgebildet sind.

3. Steuervorrichtung nach Anspruch 1 oder 2, bei der die Blitzeinheiten (2) an das Arbeitsspannungsniveau von 350 V bis 600 V angepasste SMPS (Switched Mode Power Supply)-Transformatoren aufweisen.

4. Steuervorrichtung nach einem der Ansprüche 1 bis 3, bei der die lokale Mastersteuerung (8) mittels des lokalen Feldbussystems (7) an bis zu 32 Blitzeinheiten (2) anschließbar ist.

5. Steuervorrichtung nach einem der Ansprüche 1 bis 4, bei der die lokale Mastersteuerung (8) unmittelbar mit einer mobilen Mastersteuerung (9) mit einem PC (10) oder einer ähnlichen Steuereinheit in Steckverbindung bringbar ist.

6. Steuervorrichtung nach einem der Ansprüche 1 bis 5, bei der jede Blitzeinheit (2) Eingangs- und Ausgangsanschlüsse aufweist, über die sie an die Energieversorgungsleitung (4) anschließbar ist.

7. Steuervorrichtung nach einem der Ansprüche 1 bis 5, bei der die Blitzeinheiten (2) über Anschlussdosen (5) an die Energieversorgungsleitung (4) angeschlossen sind.

8. Steuervorrichtung nach einem der Ansprüche 1 bis 7, bei der die lokale Mastersteuerung (8) über einen ersten Verbindungsbus (11) an eine Anwenderzentrale anschließbar ist.

9. Steuervorrichtung nach Anspruch 8, bei der die lokale Mastersteuerung (8) über den ersten (11) und einen zweiten Verbindungsbus (12) an eine Anwenderzentrale anschließbar ist.

10. Steuervorrichtung nach einem der Ansprüche 1 bis 7, bei der die lokale Mastersteuerung (8) über einen Multileitungsverbindungsbus (13) an eine Anwenderzentrale anschließbar ist.

11. Steuervorrichtung nach Anspruch 8, bei der die lokale Mastersteuerung (8) über den ersten Verbindungsbus (11) und einen Multileitungsverbindungsbus (13) an eine Anwenderzentrale anschließbar ist.

12. Steuervorrichtung nach einem der Ansprüche 1 bis 11, bei der jede Blitzeinheit (2) ein Gehäuse aufweist.

13. Steuervorrichtung nach einem der Ansprüche 1 bis 11, bei der mehrere Blitzeinheiten (2), vorzugsweise drei Blitzeinheiten (2), in einem Gehäuse angeordnet sind.

14. Steuervorrichtung nach Anspruch 12 oder 13, bei der die die Blitzeinheiten (2) aufnehmenden Gehäuse als Kunststoffgehäuse ausgebildet sind.

15. Steuervorrichtung nach Anspruch 13 oder 14, bei der Schaltelektroniken der in einem Gehäuse angeordneten mehreren Blitzeinheiten (2) redundant mit elektrischer Energie versorgbar sind.

16. Steuervorrichtung nach einem der Ansprüche 1 bis 15, bei der jede Blitzeinheit (2) ein Überspannungsschutzglied aufweist.

17. Steuervorrichtung nach einem der Ansprüche 1 bis 16, bei der jeder Blitzeinheit eine Heizvorrichtung und Temperatursensoren zugeordnet sind.

18. Steuervorrichtung nach einem der Ansprüche 1 bis 17, bei der der PCB jeder Blitzeinheit (2) einen zusätzlichen Anschluss aufweist, mittels dem eine unmittelbare Verbindung mit einer mobilen Mastersteuerung (9) mit einem PC (10) oder einer ähnlichen Steuereinheit installierbar ist.

## Claims

1. Control device for flashlight systems at airports, having flashlight units (2), which are connected on the input side to a power supply line (4) and on the output side to in each case one flash lamp (3) of the flashlight system by means of a lamp cable (6), and which have in each case one PCB (Printed Circuit Board) for controlling the flash lamp (3), a local master controller (8), and a connecting device (7), by means of which the local master controller (8) is connected to the flashlight units (2), each flashlight unit (2) having a power-integrating low-voltage capacitor which can be supplied with power by a power factor-corrected power source which is connected to the flash lamps (3) in the form of low-voltage lamps, the power transferred to the flash lamps (3) is capable of being controlled electronically in order to regulate the luminous intensity and to stabilize it with respect to voltage-source and line-impedance fluctuations, the connecting device (7) which connects the flashlight units (2) to the local master controller (8) being in the form of a local field bus system (7), such that, by means of the same electrical installation, different, conventionally arranged, simultaneous or mixed flashlight configuration patterns can be realized, the PCBs of the flashlight units (2) being provided with a microcontroller, by means of which each flash lamp (3) in the form of a low-voltage lamp is assigned an individual address, and the microcontroller of each PCB being designed such that the luminous intensity of each flash lamp (3) in the form of a low-voltage lamp can be controlled separately, **characterized in that** the luminous intensity of each flash lamp (3) in the form of a low-voltage lamp can be regulated electronically as a function of parameters determining the weather and/or light conditions and can be regulated as a function of the cable length of the lamp cable (6) between the flashlight unit (2) and the flash lamp (3) in the form of a low-voltage lamp.

2. Control device according to Claim 1, in which the low-voltage capacitors of the flashlight units (2) are matched to an operating voltage level of 350 V to 600 V.

3. Control device according to Claim 1 or 2, in which the flashlight units (2) have SMPS (Switched Mode Power Supply) transformers which are matched to the operating voltage level of 350 V to 600 V.

4. Control device according to one of Claims 1 to 3, in which the local master controller (8) can be connected to up to 32 flashlight units (2) by means of the local field bus system (7).

5. Control device according to one of Claims 1 to 4, in which the local master controller (8) can be plug-connected directly to a mobile master controller (9) with a PC (10) or a similar control unit.

6. Control device according to one of Claims 1 to 5, in which each flashlight unit (2) has input and output connections, by means of which it can be connected to the power supply line (4) .

7. Control device according to one of Claims 1 to 5, in which the flashlight units (2) are connected to the power supply line (4) via connecting sockets (5).

8. Control device according to one of Claims 1 to 7, in which the local master controller (8) can be connected to a user control centre via a first connecting bus (11).

9. Control device according to Claim 8, in which the local master controller (8) can be connected to a user control centre via the first (11) and a second connecting bus (12).

10. Control device according to one of Claims 1 to 7, in which the local master controller (8) can be connected to a user control centre via a multi-line connecting bus (13).

11. Control device according to Claim 8, in which the local master controller (8) can be connected to a user control centre via the first connecting bus (11) and a multi-line connecting bus (13).

12. Control device according to one of Claims 1 to 11, in which each flashlight unit (2) has a housing.

13. Control device according to one of Claims 1 to 11, in which two or more flashlight units (2), preferably three flashlight units (2), are arranged in one housing.

14. Control device according to Claim 12 or 13, in which the housings accommodating the flashlight units (2) are in the form of plastic housings.

15. Control device according to Claim 13 or 14, in which switching electronics of the two or more flashlight units (2) arranged in one housing can be supplied with electrical power in a redundant manner.

16. Control device according to one of Claims 1 to 15, in which each flashlight unit (2) has an overvoltage protection element.

17. Control device according to one of Claims 1 to 16, in which each flashlight unit has an associated heating device and associated temperature sensors.

18. Control device according to one of Claims 1 to 17, in which the PCB of each flashlight unit (2) has an additional connection, by means of which a direct connection to a mobile master controller (9) with a PC (10) or a similar control unit can be installed.

## Revendications

1. Dispositif de commande pour des installations de feux à éclats sur des aéroports, comportant des unités à éclats (2) qui sont raccordées côté entrée à une ligne d'alimentation en énergie (4) et côté sortie respectivement à une lampe à éclats (3) de l'installation de feux à éclats par l'intermédiaire d'un câble de lampe (6) et qui comportent chacune une carte à circuit imprimé pour commander la lampe à éclats (3), une commande principale (8) locale et une installation de raccordement (7) qui permet de relier la commande principale (8) locale aux unités à éclats (2), dans ce dispositif de commande
- chaque unité à éclats (2) comporte un condensateur à basse tension qui intègre l'énergie et qui peut être alimenté par une source de courant corrigée quant au facteur de puissance et raccordée aux lampes à éclats (3) sous forme de lampes à basse tension,
- l'énergie transmise aux lampes à éclats (3) peut être commandée par électronique pour régler l'intensité lumineuse et pour assurer sa stabilité par rapport aux variations des sources de tension et des impédances des lignes,
- l'installation de raccordement (7) qui relie les unités à éclats (2) à la commande principale (8) locale est conçue comme un système local (7) de bus de terrain de sorte que la même installation électrique permet de réaliser différents modèles de configurations à éclats simultanés ou mixtes, ordonnés de façon classique,
- les cartes à circuit imprimé des unités à éclats (2) sont équipées d'un microcontrôleur grâce auquel une adresse individuelle est associée à chaque lampe à éclats (3) sous forme de lampe à basse tension,
- le microcontrôleur de chaque carte à circuit imprimé est conçu de telle manière qu'il est possible de commander séparément l'intensité lumineuse de chaque lampe à éclats (3) sous forme de lampe à basse tension,
**caractérisé en ce que** l'intensité lumineuse de chaque lampe à éclats (3) sous forme de lampe à basse tension peut être réglée électroniquement en fonction de certains paramètres qui déterminent les conditions météorologiques et lumineuses et en fonction de la longueur du câble de lampe (6) entre l'unité à éclats (2) et la lampe à éclats (3) sous forme de lampe à basse tension.

2. Dispositif de commande selon la revendication 1, dans lequel les condensateurs à basse tension des unités à éclats (2) sont conçus pour s'ajuster à un niveau de tension de service de 350 V à 600 V.

3. Dispositif de commande selon la revendication 1 ou 2, dans lequel les unités à éclats (2) comportent des transformateurs SMPS (Switched Mode Power Supply : alimentation électrique en mode commuté) ajustés au niveau de tension de service de 350 V à 600 V.

4. Dispositif de commande selon l'une des revendications 1 à 3, dans lequel la commande principale locale (8) peut être raccordée à un maximum de 32 unités à éclats (2) à l'aide du système local (7) de bus de terrain.

5. Dispositif de commande selon l'une des revendications 1 à 4, dans lequel la commande principale locale (8) peut être reliée par enfichage directement à une commande principale mobile (9) équipée d'un ordinateur personnel (10) ou d'une unité de commande comparable.

6. Dispositif de commande selon l'une des revendications 1 à 5, dans lequel chaque unité à éclats (2) comporte des raccords d'entrée et de sortie au moyen desquels elle peut être raccordée à la ligne d'alimentation en énergie (4).

7. Dispositif de commande selon l'une des revendications 1 à 5, dans lequel les unités à éclats (2) sont raccordées à la ligne d'alimentation en énergie (4) par l'intermédiaire de prises de boîtes de jonction (5).

8. Dispositif de commande selon l'une des revendications 1 à 7, dans lequel la commande principale locale (8) peut être raccordée à un centre d'utilisateurs par l'intermédiaire d'un premier bus de liaison (11).

9. Dispositif de commande selon la revendication 8, dans lequel la commande principale locale (8) peut être raccordée à un centre d'utilisateurs par l'intermédiaire du premier (11) et d'un deuxième (12) bus de liaison.

10. Dispositif de commande selon l'une des revendications 1 à 7, dans lequel la commande principale locale (8) peut être raccordée à un centre d'utilisateurs par l'intermédiaire d'un bus de liaison à plusieurs lignes (13).

11. Dispositif de commande selon la revendication 8, dans lequel la commande principale locale (8) peut être raccordée à un centre d'utilisateurs par l'intermédiaire du premier bus de liaison (11) et d'un bus de liaison à plusieurs lignes (13).

12. Dispositif de commande selon l'une des revendications 1 à 11, dans lequel chaque unité à éclats (2) comporte un boîtier.

13. Dispositif de commande selon l'une des revendications 1 à 11, dans lequel plusieurs unités à éclats (2), de préférence trois unités à éclats (2), sont placées dans un boîtier.

14. Dispositif de commande selon la revendication 12 ou 13, dans lequel le boîtier qui reçoit les unités à éclats (2) est un boîtier en matière plastique.

15. Dispositif de commande selon la revendication 13 ou 14, dans lequel les électroniques de commutation des unités à éclats (2) placées dans un boîtier peuvent être alimentées de manière redondante en énergie électrique.

16. Dispositif de commande selon l'une des revendications 1 à 15, dans lequel chaque unité à éclats (2) comporte un organe coupe-circuit de surtension.

17. Dispositif de commande selon l'une des revendications 1 à 16, dans lequel un dispositif de chauffage et des capteurs de température sont associés à chaque unité à éclats.

18. Dispositif de commande selon l'une des revendications 1 à 17, dans lequel la carte à circuit imprimé de chaque unité à éclats (2) comporte un raccord supplémentaire qui permet d'installer une liaison directe avec une commande principale mobile (9) équipée d'un ordinateur personnel (10) ou d'une unité de commande comparable.
